# FASCICULE DE BREVET EUROPEEN

(11) **EP 2 466 712 B1**
(45) Date de publication et mention de la délivrance du brevet: **10.03.2021**
(21) Numéro de dépôt: 11354063.7
(22) Date de dépôt: 08.11.2011
(51) Int. Cl.: H02H 3/05, G06F 11/27

(54) **Procédé et dispositif de surveillance d'un dispositif équipé d'un microprocesseur**
Verfahren und Vorrichtung zur Überwachung einer mit einem Mikroprozessor ausgestatteten Vorrichtung
Method and device for monitoring a device provided with a microprocessor

(30) Priorité: 14.12.2010 FR 1004867
(43) Date de publication de la demande: 20.06.2012
(73) Titulaire: Schneider Electric Industries SAS, 92500 Rueil-Malmaison (FR)
(72) Inventeur: Gruffaz, Franck, 38050 Grenoble Cedex 09 (FR)
(74) Mandataire: Tripodi, Paul

(56) Documents cités:
- DE-A1- 19 927 030
- JP-A- 5 207 637
- US-A- 5 436 837
- US-A1- 2002 144 176
- US-B2- 7 177 129

## Description

### DOMAINE TECHNIQUE

La présente invention concerne un dispositif de surveillance pour un microprocesseur, destiné au fonctionnement au sein d'un système équipé d'un microprocesseur, dont la sûreté est un paramètre important. Elle concerne aussi un système comprenant au moins un microprocesseur et équipé d'un tel dispositif de surveillance, ce système pouvant être un disjoncteur pour une installation électrique. Enfin, elle concerne un procédé de surveillance d'un microprocesseur, permettant d'établir un diagnostic du fonctionnement de ce microprocesseur.

### ETAT DE LA TECHNIQUE

Il est habituel d'équiper un dispositif comprenant un microprocesseur d'un dispositif de surveillance temporel, aussi appelé chien de garde. Un tel dispositif de surveillance a pour fonction de détecter une anomalie éventuelle du séquencement microprocesseur, afin de déclencher une intervention de sécurité, comme un reset du microprocesseur ou une mise dans une configuration de sécurité du dispositif. Le chien de garde a ainsi pour fonction de répondre à certains dysfonctionnements du microprocesseur qui pourraient entraîner une situation dangereuse, d'insécurité.

Mais ce dispositif s'avère insuffisant lorsqu'un niveau de sécurité fonctionnelle plus élevé est nécessaire, en particulier lorsqu'il est nécessaire de vérifier l'intégrité fonctionnelle du microprocesseur assumant des fonctions de sécurité. Une première solution consiste à utiliser un second microprocesseur dédié à la surveillance du microprocesseur principal, ce dernier étant généralement incapable de s'autotester avec une couverture de test suffisante. Toutefois, une telle solution est coûteuse tant en coût de fabrication produit qu'en coût de développement et s'avère encombrante, puisqu'elle nécessite un emplacement important sur un circuit imprimé pour ajouter le microprocesseur supplémentaire. Par ailleurs une telle solution, à cause de sa complexité conduit à dé-fiabiliser le produit.

Le document FR2602618 illustre une solution de l'état de la technique dans laquelle un chien de garde surveille le déroulement périodique du traitement de l'information pilotée par un microprocesseur équipant un disjoncteur d'une installation électrique. Un tel microprocesseur effectue un certain nombre de traitements numériques sur les signaux électriques d'une installation électrique et élabore un ordre de déclenchement du disjoncteur lorsque certains seuils prédéfinis sont atteints. Le microprocesseur remplit ainsi une fonction essentielle pour la sécurité du système et sa défaillance entraîne une situation très risquée pour l'installation électrique surveillée.

Pour pallier une telle défaillance, le chien de garde surveille d'éventuelles perturbations, qu'il détecte par des retards d'un cycle périodique, sur une opération périodique que doit effectuer le microprocesseur. Le chien de garde peut ainsi détecter des défaillances du microprocesseur : dans une telle situation, il lui transmet un ordre de réinitialisation et si cette intervention ne résout pas le problème, ne s'accompagne pas d'un redémarrage normal du cycle périodique géré par le microprocesseur, le chien de garde transmet alors un ordre de déclenchement du disjoncteur, pour une mise en sécurité de l'installation électrique, puisque son disjoncteur est défaillant. Toutefois, une telle solution ne permet pas de détecter toutes les défaillances du microprocesseur, dont certaines fonctions peuvent ne pas fonctionner correctement sans répercussion sur le cycle périodique examiné. Cette approche peut donc être améliorée.

Autres dispositifs de surveillance pour dispositifs à microprocesseur sont divulgués par US 5436837 et US 2002/144176.

### EXPOSE DE L'INVENTION

Ainsi, l'invention a pour objet de proposer une solution de surveillance du fonctionnement d'un microprocesseur qui ne présente pas tout ou partie des inconvénients de l'état de la technique.

Plus précisément, l'invention a pour objet de proposer une solution de surveillance du fonctionnement d'un microprocesseur fiable, peu coûteuse, et peu encombrante.

Un procédé de surveillance d'un dispositif équipé d'un microprocesseur selon l'invention est défini par la revendication 1.

De préférence, le procédé de surveillance comprend en outre les étapes suivantes :
- détermination au niveau du microprocesseur des données d'entrée sous la forme de valeurs variables correspondant à un certain nombre de valeurs prédéfinies ;
- transmission de ces valeurs au dispositif de surveillance par un moyen de communication.

Avantageusement, l'étape de détermination des données d'entrée comprend une génération aléatoire des valeurs variables et/ou une extraction et/ou une combinaison de valeurs variables à partir de bits de données provenant de l'extérieur et reçues par le microprocesseur.

Avantageusement, l'étape de détermination des données d'entrée comprend la détermination de la valeur de plusieurs nombres dont au moins un bit est variable et prend une valeur égale à une des valeurs variables.

Avantageusement, l'étape de réalisation d'au moins un calcul au sein du microprocesseur comprend des calculs comme des divisions, multiplications, racines carrées, élévations au carré, entre les nombres.

De préférence, le procédé de surveillance comprend une étape de détermination d'au moins un bit représentant les résultats du au moins un calcul mis en œuvre par le microprocesseur, et une étape de transmission de ce au moins un bit au dispositif de surveillance.

Avantageusement, l'étape de réalisation d'au moins un calcul au sein du microprocesseur est mise en oeuvre par un logiciel d'un bloc de diagnostic du microprocesseur.

Avantageusement, la réalisation d'au moins une opération logique au sein du dispositif de surveillance comprend des opérations sur les valeurs variables.

De préférence, le procédé de surveillance comprend la réalisation de comparaison des valeurs variables à partir d'au moins une porte OU exclusif au sein du dispositif de surveillance afin d'obtenir des résultats sur un seul bit dépendant de l'égalité ou la différence des valeurs variables comparées.

Avantageusement, l'étape de comparaison comprend la génération d'un booléen dont une première valeur représente un état normal du dispositif équipé d'un microprocesseur et une seconde valeur un état défaillant.

De préférence, le procédé de surveillance comprend une étape d'actionnement du dispositif pour le mettre dans une configuration de sécurité lors d'un état défaillant de son microprocesseur.

Un dispositif de surveillance pour un dispositif équipé d'un microprocesseur selon l'invention est défini par la revendication 12.

De préférence, son bloc de logique câblée et son bloc comparateur comprennent des portes logiques de type OU, NON-OU, ET, NON-ET, OU exclusif et/ou NON-OU exclusif.

Un système selon l'invention comprenant un microprocesseur comprend un dispositif de surveillance externe tel que défini ci-dessus relié par au moins un moyen de communication avec le microprocesseur, et le microprocesseur comprend un bloc de diagnostic qui met en œuvre la réalisation d'au moins un calcul du procédé de surveillance tel que défini ci-dessus.

De préférence, le système est un disjoncteur électrique, un système de surveillance de l'installation électrique ou un automatisme de sécurité.

### BREVE DESCRIPTION DES DESSINS

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente schématiquement un système équipé d'un dispositif de surveillance de son microprocesseur selon l'invention.
La figure 2 représente un organigramme illustrant le fonctionnement du procédé de surveillance d'un microprocesseur selon un mode d'exécution de l'invention.
La figure 3 représente de manière plus détaillée certaines parties d'un système équipé d'un dispositif de surveillance de son microprocesseur selon un mode d'exécution de l'invention.
La figure 4 représente une variante du système selon le mode d'exécution de l'invention.

### DESCRIPTION DETAILLEE DE MODES DE REALISATION PREFERES

Le concept de l'invention consiste à utiliser un dispositif de surveillance d'un microprocesseur comprenant un bloc de logique câblée, discrète ou intégrée, qui permet d'exécuter très simplement quelques opérations logiques, et dont le résultat est comparé au résultat obtenu par la réalisation de calculs connexes effectués en parallèle par le microprocesseur à surveiller. Cette comparaison permet d'en déduire un diagnostic du fonctionnement du microprocesseur, et/ou de mettre le système en position de repli sûre.

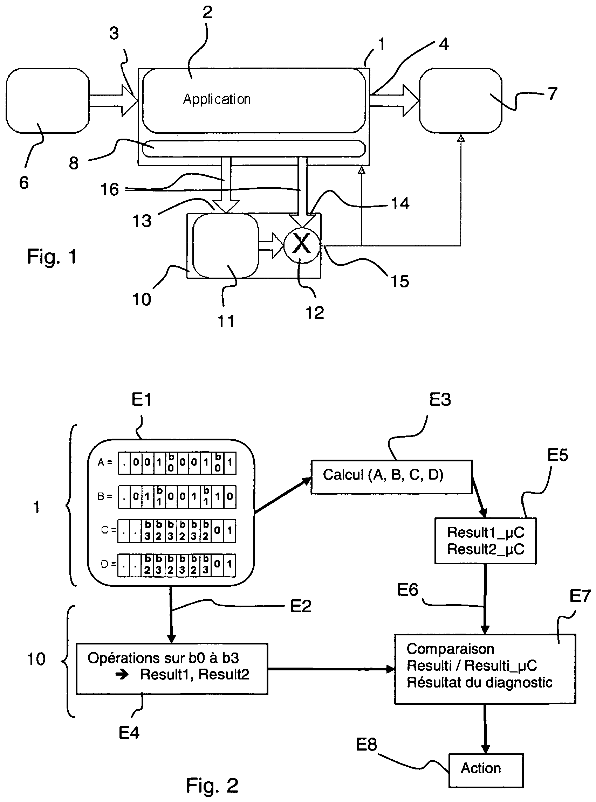

La figure 1 illustre schématiquement une mise en œuvre de la solution de surveillance selon le concept de l'invention. Un système comprend d'une part un microprocesseur 1 à surveiller et d'autre part un dispositif de surveillance 10 distinct du microprocesseur 1.

Le système comprend donc un microprocesseur 1 qui participe à la mise en œuvre d'une certaine application nécessitant un niveau élevé de sécurité fonctionnelle, au moyen d'au moins un logiciel 2, à partir de données reçues en entrée 3, par exemple provenant de mesures de capteurs et/ou de tout autre dispositif 6 et transmises au microprocesseur 1 par tout moyen de communication, et qui permet en sortie 4 de générer des données de sortie et/ou des commandes d'un certain dispositif 7, comme le déclenchement ou pas dans le cas d'un disjoncteur par exemple, ou une alarme dans le cadre d'équipement de surveillance, ou une commande dans le cas de systèmes automatisés de sécurité. Enfin, le microprocesseur 1 met en œuvre des calculs connexes par un bloc de diagnostic 8, sur la base d'une tâche logicielle dédiée au procédé de surveillance du microprocesseur 1 ou intégrée à l'application 2, et communiquant avec le dispositif de surveillance 10.

Selon l'invention, le système comprend donc un dispositif de surveillance 10 qui comprend une première entrée 13 prévue pour une liaison avec le microprocesseur 1, pour recevoir des premières données du microprocesseur 1, et une seconde entrée 14 prévue pour une liaison avec le microprocesseur 1, pour recevoir des secondes données du microprocesseur 1, par des moyens de communication 16. En remarque, les deux entrées 13, 14 ont été représentées distinctes pour des raisons d'illustration de l'invention, mais peuvent correspondre physiquement à une même entrée. Le dispositif de surveillance 10 comprend de plus un ensemble de composants élémentaires formant un bloc de logique câblée 11 et un bloc comparateur 12, ainsi qu'une sortie 15 pour émettre un signal représentant le résultat du diagnostic du microprocesseur 1 et permettant la mise en repli sûre du système.

Le fonctionnement de ce système va maintenant être explicité. En parallèle de sa fonction principale lui permettant d'exécuter une certaine application, à l'aide d'un premier logiciel 2, le microprocesseur 1 met en œuvre une tâche logicielle dans son bloc de diagnostic 8, en coopération avec un dispositif de surveillance externe, indépendant. Pour cela, le microprocesseur transmet des données d'entrée au dispositif de surveillance 10, effectue un calcul à partir de ces données d'entrée qui génère un premier résultat, transmis de même au dispositif de surveillance 10 par sa seconde entrée 14. En parallèle, le dispositif de surveillance 10 exploite les données d'entrée reçues sur sa première entrée 13 pour effectuer des opérations par l'intermédiaire de son bloc de logique câblée 11, dont le second résultat ainsi obtenu doit être le même que celui obtenu par le bloc de diagnostic 8 du microprocesseur 1, lors du fonctionnement correct de ce microprocesseur 1. Le bloc comparateur 12 du dispositif de surveillance reçoit d'une part le premier résultat du bloc de logique câblée 11 et d'autre part le second résultat provenant du microprocesseur 1, effectue la comparaison de ces deux résultats et fournit en sortie 15 un signal représentant le diagnostic du microprocesseur 1, sur la base de cette comparaison. En cas de défaillance du microprocesseur 1, ce signal de sortie représente par exemple une commande de mise en position de repli sûre assurant la mise en sécurité du système dont la sûreté est mise en cause. Ce signal de sortie représente aussi par exemple un signal d'alarme permettant de transférer la sécurité du système dont la sûreté est mise en cause à un autre dispositif externe de sécurité, afin que cet autre dispositif de sécurité puisse assurer tout ou partie des fonctions de sécurité mises en cause.

La figure 2 illustre plus précisément une mise en œuvre du procédé de surveillance d'un microprocesseur selon un mode d'exécution de l'invention.

Selon ce mode d'exécution, le procédé repose sur quatre nombres A, B, C, et D, définis dans une première étape E1. Ces nombres varient à chaque répétition du procédé, par l'intermédiaire de quatre bits de valeurs variables notés b0, b1, b2, b3. Ces valeurs variables peuvent être générées aléatoirement par le microprocesseur et/ou extraites ou calculées à partir d'une donnée d'entrée du microprocesseur, provenant d'un capteur de mesures par exemple, en choisissant par exemple les quatre derniers bits de cette donnée.

Dans une seconde étape E2, le procédé transmet ces quatre valeurs variables au dispositif de surveillance 10 par le moyen de communication 16.

Dans une troisième étape E3, le microprocesseur met en œuvre un premier calcul, qui correspond à la division flottante de B par A, et un second calcul qui correspond à la multiplication de C par D puis au calcul de C². Avantageusement, le calcul mis en œuvre au sein du microprocesseur 1 dans le cadre du procédé de surveillance selon l'invention est suffisamment complexe pour nécessiter le recours du maximum de ressources du microprocesseur 1, et en particulier aux parties les plus critiques du microprocesseur 1. Ce calcul intègre ainsi avantageusement des multiplications et/ou des divisions. En variante, tout autre calcul peut être envisagé.

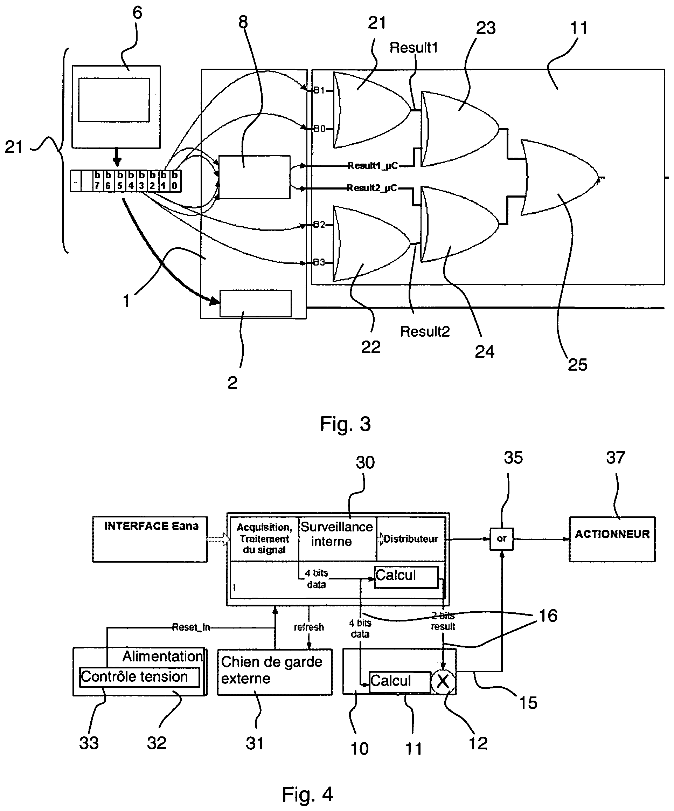

En parallèle, dans une quatrième étape E4, le bloc de logique câblée 11 du dispositif de surveillance 10 met en œuvre deux comparaisons, entre b0 et b1 d'une part, et entre b2 et b3 d'autre part, par l'intermédiaire de deux fonctions logiques OU exclusif (XOR) 21, 22, visibles sur la figure 3, afin de définir deux valeurs result1, result2, selon les règles suivantes :
- Si b1 = b0 alors result1 = 0, sinon result1 = 1,
- Si b3 = b2 alors result2 = 0, sinon result2 = 1.

Dans une cinquième étape E5, le procédé détermine la valeur de données result1_µC, result2_µC représentant les résultats des calculs mis en œuvre par le microprocesseur 1, sur deux bits seulement, par la définition suivante:
- Si B/A = 2 alors result1_µC = 0, sinon result1_µC = 1,
- Si (C x D = C²) alors result2_µC = 0, sinon result2_µC = 1.

Dans une sixième étape E6, les deux résultats result1_µC, result2_µC sont transmis au dispositif de surveillance 10, qui met en œuvre une septième étape de comparaison E7, qui comprend d'abord deux nouvelles comparaisons de ces valeurs avec les deux valeurs result1, result2 obtenues par le dispositif de surveillance 10, par l'intermédiaire de deux fonctions OU exclusif (XOR) 23, 24 supplémentaires, dont les deux résultats doivent être égaux à 0 si result1 = result1_µC et si result2 = result2_µC, ce qui signifie que le microprocesseur fonctionne normalement et a conduit aux bons résultats result1_µC, result2_µC lors des calculs mis en œuvre, et donc aux bons résultats lors des calculs de l'étape E3. Ensuite, une nouvelle fonction OU exclusif 25 permet de déterminer un résultat unique, sur un bit de sortie, qui représente le diagnostic final du microprocesseur. Ce résultat prend la valeur de zéro dans le cas où les deux conditions suivantes sont vérifiées : result1 = result1_µC et result2 = result2_µC. Dans les autres cas, ce résultat prend la valeur de 1.

Ensuite, le signal de sortie représentant le diagnostic du microprocesseur 1 peut directement être exploité, dans une étape E8, pour commander des actionneurs du système, pour sa mise en position de repli sûre par exemple en cas de défaillance du microprocesseur.

Naturellement, le procédé de surveillance précédent peut présenter de nombreuses variantes sans sortir du concept de l'invention. Notamment, les calculs et opérations mises en œuvre peuvent différer des exemples décrits. De plus, les différentes étapes décrites peuvent être exécutées selon des chronologies différentes. De préférence, certaines étapes seront effectuées en parallèle, de manière sensiblement simultanée au sein du microprocesseur et au sein du dispositif de surveillance.

En résumé, ce procédé de surveillance comprend les étapes essentielles suivantes :
E3 - réalisation d'au moins un calcul au sein du microprocesseur à partir de données d'entrée ;
E4 - réalisation d'au moins une opération logique par des composants câblés et matériels au sein d'un dispositif de surveillance à partir d'au moins une partie des mêmes données d'entrée ;
E7 - comparaison des résultats du au moins un calcul effectué au sein du microprocesseur et de la au moins une opération logique effectuée au sein du dispositif de surveillance pour en déduire un diagnostic du microprocesseur et/ou une commande de mise en repli sûre.

La figure 3 représente de nouveau le système selon l'invention, incluant notamment en détail la structure du bloc de logique câblée 11 et du bloc comparateur 12 du dispositif de surveillance 10, pour la mise en œuvre du procédé de surveillance décrit ci-dessus. Sur cette implémentation, les différentes valeurs variables b0 à b3 sont obtenues à partir de quatre bits d'une donnée transmise à l'entrée du microprocesseur 1 et provenant d'un dispositif 6. Le bloc de logique câblée 11 du dispositif de surveillance 10 reçoit ces données et met en œuvre le procédé de surveillance décrit précédemment à partir de deux portes logiques OU exclusif 21, 22 alors que le bloc comparateur 12 comprend trois portes logiques OU exclusif 23 à 25.

En parallèle, le microprocesseur exploite ces variables dans son bloc de diagnostic 8 pour réaliser les étapes explicitées précédemment.

Naturellement, le procédé de surveillance selon l'invention peut être mis en œuvre avec tout autre calcul, incluant par exemple des divisions, des multiplications, des élévations au carré, des racines carrées, etc. La sélection et la définition des nombres A, B, C, et D à partir de quatre valeurs variables de type booléen b0, b1, b2 et b3 en entrée de ce calcul du procédé de surveillance permet de déterminer simplement le résultat attendu par le calcul du microprocesseur, sans besoin de réaliser le même calcul complexe au sein du dispositif de surveillance, mais par quelques portes logiques. Ce principe peut être implémenté à partir d'un nombre différent de valeurs variables et/ou nombres d'entrée, et en intégrant un nombre différent de variables, notamment de type booléen. Un utilisateur choisira un compromis entre la complexité du calcul et le niveau de sécurité fonctionnelle qu'il souhaite atteindre. Naturellement, ce principe de l'invention peut être utilisé avec d'autres blocs de logique, se présentant à partir d'un nombre restreint de portes logiques parmi les suivantes OU, NON-OU, ET, NON-ET, OU exclusif et/ou NON-OU exclusif, plus souvent appelées par leur dénomination anglo-saxonne OR, NOR, AND, NAND, XOR, XNOR, etc. Naturellement, ce principe de l'invention peut être utilisé également avec des portes utilisant de la logique séquentielle. Cette utilisation d'un dispositif de surveillance externe réalisant des opérations simples, à partir d'une structure de type matériel (hardware), permet d'atteindre un niveau de surveillance élevé d'un système de manière simple, fiable, peu coûteuse et peu encombrante.

Naturellement, la solution de surveillance selon l'invention peut être combinée avec toutes les autres solutions existantes de surveillance d'un système, par exemple combinée avec un dispositif chien de garde. Ainsi, la figure 4 représente un exemple d'intégration de la solution de l'invention dans un système complexe, exigeant un haut niveau de sécurité. Ce système comprend un microprocesseur 1 et regroupe plusieurs éléments de sécurité qui surveillent le bon fonctionnement du microprocesseur. Il comprend d'abord un dispositif de surveillance 10 pour mettre en œuvre un procédé de surveillance selon l'invention, tel que décrit précédemment. Il intègre de plus un dispositif de surveillance interne 30, un dispositif de surveillance externe 31, qui vérifie le bon fonctionnement temporel du microprocesseur, du type de celui décrit dans le document FR2602618, lié à une alimentation électrique 32 intégrant une surveillance 33 de la tension d'alimentation. Ensuite, le système comprend une ou plusieurs fonction(s) logique(s) 35 pour permettre la commande d'une action de sécurité dès qu'un dispositif de sécurité émet une alarme. Cette commande de sécurité agit sur un actionneur 37, qui peut par exemple mettre en position de repli sûre un disjoncteur, une alarme ou un actionneur.

Le dispositif de surveillance d'un microprocesseur selon l'invention peut être intégré dans tout système exigeant un niveau de sécurité fonctionnelle élevé. Il est notamment particulièrement adapté pour former un disjoncteur compatible avec une installation de sécurité, intégrant par exemple des contraintes de sécurité fonctionnelle de type SIL suivant la norme IEC 61508.

Naturellement, le concept de l'invention est adapté pour un système comprenant plusieurs microprocesseurs, qui pourrait comprendre un dispositif de surveillance pour chaque microprocesseur ou en variante, un même dispositif de surveillance qui pourrait surveiller plusieurs microprocesseurs. Selon une autre variante de réalisation, plusieurs dispositifs de surveillance selon l'invention peuvent être associés à un même microprocesseur, pour augmenter le niveau de sécurité fonctionnelle. D'autre part, le dispositif de surveillance de l'invention a été décrit en rapport avec un microprocesseur, mais peut être associé à tout composant intelligent intégrant une Unité Arithmétique et Logique (ALU).

## Revendications

1. Procédé de surveillance d'un dispositif équipé d'un microprocesseur (1), comprenant les étapes suivantes :
(E3) - réalisation d'au moins un calcul au sein du microprocesseur (1) à partir de données d'entrée reçue en entrée (3) du microprocesseur (1);
(E4) - réalisation d'au moins une opération logique par des portes logiques au sein d'un dispositif de surveillance (10) externe à partir des mêmes données d'entrée ;
(E7) - comparaison des résultats du au moins un calcul effectué au sein du microprocesseur (1) et de la au moins une opération logique effectuée au sein du dispositif de surveillance (10) pour en déduire un diagnostic du microprocesseur (1) et
- émission en sortie (15) du dispositive de surveillance (10) d'un signal représentant le diagnostic du microprocesseur (1) sur la base de cette comparaison.

2. Procédé de surveillance selon la revendication précédente, **caractérisé en ce qu'**il comprend en outre les étapes suivantes :
(E1) - détermination au niveau du microprocesseur (1) des données d'entrée sous la forme de valeurs variables (b0, b1, b2, b3) correspondant à un certain nombre de valeurs prédéfinies ;
(E2) - transmission de ces valeurs au dispositif de surveillance (10) par un moyen de communication (16).

3. Procédé de surveillance selon la revendication précédente, **caractérisé en ce que** l'étape de détermination des données d'entrée (E1) comprend une génération aléatoire des valeurs variables (b0, b1, b2, b3) et/ou une extraction et/ou une combinaison de valeurs variables (b0, b1, b2, b3) à partir de bits de données provenant de l'extérieur et reçues en entrée (3) du microprocesseur (1).

4. Procédé de surveillance selon la revendication 2 ou 3, **caractérisé en ce que** l'étape de détermination des données d'entrée (E1) comprend la détermination de la valeur de plusieurs nombres (A, B, C, D) dont au moins un bit est variable et prend une valeur égale à une des valeurs variables (b0, b1, b2, b3).

5. Procédé de surveillance selon la revendication précédente, **caractérisé en ce que** l'étape de réalisation d'au moins un calcul (E3) au sein du microprocesseur (1) comprend des calculs comme des divisions, multiplications, racines carrées, élévations au carré, entre les nombres (A, B, C, D).

6. Procédé de surveillance selon la revendication précédente, **caractérisé en ce qu'**il comprend une étape (E5) de détermination d'au moins un bit (result1_µC, result2_µC) représentant les résultats du au moins un calcul (E3) mis en œuvre par le microprocesseur (1), et une étape (E6) de transmission de ce au moins un bit (result1_µC, result2_µC) au dispositif de surveillance (10).

7. Procédé de surveillance selon l'une des revendications précédentes, **caractérisé en ce que** l'étape de réalisation d'au moins un calcul (E3) au sein du microprocesseur (1) est mise en œuvre par un logiciel d'un bloc de diagnostic (8) du microprocesseur (1).

8. Procédé de surveillance selon la revendication 2, **caractérisé en ce que** la réalisation d'au moins une opération logique (E4) au sein du dispositif de surveillance comprend des opérations sur les valeurs variables (b0, b1, b2, b3).

9. Procédé de surveillance selon la revendication précédente, **caractérisé en ce qu'**il comprend la réalisation de comparaison des valeurs variables (b0, b1, b2, b3) à partir d'au moins une porte OU exclusif (21, 22) au sein du dispositif de surveillance (10) afin d'obtenir des résultats sur un seul bit dépendant de l'égalité ou la différence des valeurs variables comparées.

10. Procédé de surveillance selon l'une des revendications précédentes, **caractérisé en ce que** l'étape de comparaison (E7) comprend la génération d'un booléen dont une première valeur représente un état normal du dispositif équipé d'un microprocesseur et une seconde valeur un état défaillant.

11. Procédé de surveillance selon l'une des revendications précédentes, **caractérisé en ce qu'**il comprend une étape (E8) d'actionnement du dispositif pour le mettre dans une configuration de sécurité lors d'un état défaillant de son microprocesseur.

12. Dispositif de surveillance (10) pour un dispositif équipé d'un microprocesseur (1), comprenant au moins une entrée (13) prévue pour une liaison avec un microprocesseur (1) pour recevoir des données d'entrée d'un microprocesseur, un bloc de logique câblée (11) pour effectuer des opérations logiques sur des données d'entrée provenant du microprocesseur, un bloc comparateur (12) pour comparer un résultat de calcul effectué par un microprocesseur á partir des données d'entré avec un résultat obtenu par le bloc de logique câblé (11) á partir des mêmes données d'entrée pour déduire un diagnostic du microprocesseur (1), et une sortie (15) pour émettre un signal représentant le résultat du diagnostic du fonctionnement du microprocesseur.

13. Dispositif de surveillance selon la revendication précédente, **caractérisé en ce que** son bloc de logique câblée (11) et son bloc comparateur (12) comprennent des portes logiques de type OU, NON-OU, ET, NON-ET, OU exclusif et/ou NON-OU exclusif.

14. Système comprenant un microprocesseur (1), **caractérisé en ce qu'**il comprend un dispositif de surveillance (10) externe selon la revendication 12 ou 13, relié par au moins un moyen de communication (16) avec le microprocesseur (1), et **en ce que** le microprocesseur comprend un bloc de diagnostic (8) qui met en œuvre la réalisation d'au moins un calcul (E3) du procédé de surveillance selon l'une des revendications 1 à 11.

15. Système selon la revendication précédente, **caractérisé en ce qu'**il est un disjoncteur électrique, un système de surveillance de l'installation électrique ou un automatisme de sécurité.

## Patentansprüche

1. Verfahren zur Überwachung einer mit einem Mikroprozessor (1) ausgestatteten Vorrichtung, welches die folgenden Schritte umfasst:
(E3) - Durchführung mindestens einer Berechnung innerhalb des Mikroprozessors (1) aus Eingangsdaten, die am Eingang (3) des Mikroprozessors (1) empfangen wurden;
(E4) - Durchführung mindestens einer logischen Operation durch Logikgatter innerhalb einer externen Überwachungsvorrichtung (10) aus denselben Eingangsdaten;
(E7) - Vergleich der Ergebnisse der mindestens einen Berechnung, die innerhalb des Mikroprozessors (1) durchgeführt wurde, und der mindestens einen logischen Operation, die innerhalb der Überwachungsvorrichtung (10) durchgeführt wurde, um daraus eine Diagnose des Mikroprozessors (1) abzuleiten; und
- Senden, am Ausgang (15) der Überwachungsvorrichtung (10), eines Signals, das die Diagnose des Mikroprozessors (1) repräsentiert, auf der Basis dieses Vergleichs.

2. Verfahren zur Überwachung nach dem vorhergehenden Anspruch, **dadurch gekennzeichnet, dass** es außerdem die folgenden Schritte umfasst:
(E1) - Bestimmung, am Mikroprozessor (1), der Eingangsdaten in Form von variablen Werten (b0, b1, b2, b3), die einer gewissen Anzahl von vordefinierten Werten entsprechen;
(E2) - Übertragung dieser Werte an die Überwachungsvorrichtung (10) durch ein Kommunikationsmittel (16).

3. Verfahren zur Überwachung nach dem vorhergehenden Anspruch, **dadurch gekennzeichnet, dass** der Schritt der Bestimmung der Eingangsdaten (E1) eine zufällige Erzeugung der variablen Werte (b0, b1, b2, b3) und/oder eine Extraktion und/oder eine Kombination von variablen Werten (b0, b1, b2, b3) aus Bits von Daten, die von außen kommen und am Eingang (3) des Mikroprozessors (1) empfangen werden, umfasst.

4. Verfahren zur Überwachung nach Anspruch 2 oder 3, **dadurch gekennzeichnet, dass** der Schritt der Bestimmung der Eingangsdaten (E1) die Bestimmung des Wertes mehrerer Zahlen (A, B, C, D) umfasst, von denen wenigstens ein Bit variabel ist und einen Wert annimmt, der gleich einem der variablen Werte (b0, b1, b2, b3) ist.

5. Verfahren zur Überwachung nach dem vorhergehenden Anspruch, **dadurch gekennzeichnet, dass** der Schritt der Durchführung mindestens einer Berechnung (E3) innerhalb des Mikroprozessors (1) Berechnungen wie Divisionen, Multiplikationen, Quadratwurzeln, Erhebungen ins Quadrat, zwischen den Zahlen (A, B, C, D) umfasst.

6. Verfahren zur Überwachung nach dem vorhergehenden Anspruch, **dadurch gekennzeichnet, dass** es einen Schritt (E5) der Bestimmung mindestens eines Bits (result1_µC, result2_µC), das die Ergebnisse der von dem Mikroprozessor (1) durchgeführten mindestens einen Berechnung (E3) repräsentiert, und einen Schritt (E6) der Übertragung dieses mindestens einen Bits (result1_µC, result2_µC) an die Überwachungsvorrichtung (10) umfasst.

7. Verfahren zur Überwachung nach einem der vorhergehenden Ansprüche, **dadurch gekennzeichnet, dass** der Schritt der Durchführung mindestens einer Berechnung (E3) innerhalb des Mikroprozessors (1) von einer Software eines Diagnoseblockes (8) des Mikroprozessors (1) durchgeführt wird.

8. Verfahren zur Überwachung nach Anspruch 2, **dadurch gekennzeichnet, dass** die Durchführung mindestens einer logischen Operation (E4) innerhalb der Überwachungsvorrichtung Operationen mit den variablen Werten (b0, b1, b2, b3) umfasst.

9. Verfahren zur Überwachung nach dem vorhergehenden Anspruch, **dadurch gekennzeichnet, dass** es die Durchführung eines Vergleichs der variablen Werte (b0, b1, b2, b3) anhand eines Exklusiv-Oder-Gatters (21, 22) innerhalb der Überwachungsvorrichtung (10) umfasst, um Ergebnisse auf einem einzigen Bit in Abhängigkeit von der Gleichheit oder der Verschiedenheit der verglichenen variablen Werte zu erhalten.

10. Verfahren zur Überwachung nach einem der vorhergehenden Ansprüche, **dadurch gekennzeichnet, dass** der Schritt des Vergleichs (E7) die Erzeugung einer Booleschen Variablen umfasst, von der ein erster Wert einen normalen Zustand der mit einem Mikroprozessor ausgestatteten Vorrichtung repräsentiert, und ein zweiter Wert einen fehlerhaften Zustand.

11. Verfahren zur Überwachung nach einem der vorhergehenden Ansprüche, **dadurch gekennzeichnet, dass** es einen Schritt (E8) der Betätigung der Vorrichtung umfasst, um sie bei einem fehlerhaften Zustand ihres Mikroprozessors in eine Sicherheitskonfiguration zu versetzen.

12. Überwachungsvorrichtung (10) für eine mit einem Mikroprozessor (1) ausgestattete Vorrichtung, umfassend mindestens einen Eingang (13), der für eine Verbindung mit einem Mikroprozessor (1) zum Empfangen von Eingangsdaten eines Mikroprozessors vorgesehen ist, einen verdrahteten Logikblock (11) zum Durchführen von logischen Operationen an von dem Mikroprozessor stammenden Eingangsdaten, einen Komparatorblock (12) zum Vergleichen eines Ergebnisses einer von einem Mikroprozessor anhand der Eingangsdaten durchgeführten Berechnung mit einem Ergebnis, das von dem verdrahteten Logikblock (11) anhand derselben Eingangsdaten erhalten wurde, um eine Diagnose des Mikroprozessors (1) abzuleiten, und einen Ausgang (15) zum Senden eines Signals, welches das Ergebnis der Diagnose der Funktionsweise des Mikroprozessors repräsentiert.

13. Überwachungsvorrichtung nach dem vorhergehenden Anspruch, **dadurch gekennzeichnet, dass** ihr verdrahteter Logikblock (11) und ihr Komparatorblock (12) Logikgatter vom Typ ODER, NICHT-ODER, UND, NICHT-UND, Exklusiv-ODER und/oder NICHT-Exklusiv-ODER umfassen.

14. System, welches einen Mikroprozessor (1) umfasst, **dadurch gekennzeichnet, dass** es eine externe Überwachungsvorrichtung (10) nach Anspruch 12 oder 13 umfasst, die durch mindestens ein Kommunikationsmittel (16) mit dem Mikroprozessor (1) verbunden ist, und dadurch, dass der Mikroprozessor einen Diagnoseblock (8) umfasst, welcher die Realisierung mindestens einer Berechnung (E3) des Verfahrens zur Überwachung nach einem der Ansprüche 1 bis 11 durchführt.

15. System nach dem vorhergehenden Anspruch, **dadurch gekennzeichnet, dass** es ein elektrischer Schutzschalter, ein Überwachungssystem der elektrischen Anlage oder eine Sicherheitsautomatik ist.

## Claims

1. Method for monitoring a device equipped with a microprocessor (1), comprising the following steps:
(E3) - performing at least one calculation within the microprocessor (1) using input data received as input (3) to the microprocessor (1);
(E4) - performing at least one logic operation by means of logic gates within an external monitoring device (10) using the same input data;
(E7) - comparing the results of the at least one calculation performed within the microprocessor (1) and of the at least one logic operation performed within the monitoring device (10) in order to deduce therefrom a diagnosis of the microprocessor (1); and
- sending as output (15) from the monitoring device (10) a signal representative of the diagnosis of the microprocessor (1) on the basis of this comparison.

2. Monitoring method according to the preceding claim, **characterized in that** it further comprises the following steps:
(E1) - determining in the microprocessor (1) the input data in the form of variable values (b0, b1, b2, b3) corresponding to a certain number of predefined values;
(E2) - transmitting these values to the monitoring device (10) via a means for communication (16).

3. Monitoring method according to the preceding claim, **characterized in that** the step of determining the input data (E1) comprises a random generation of the variable values (b0, b1, b2, b3) and/or an extraction and/or a combination of variable values (b0, b1, b2, b3) using data bits originating externally and received as input (3) to the microprocessor (1).

4. Monitoring method according to Claim 2 or 3, **characterized in that** the step of determining the input data (E1) comprises determining the value of a plurality of numbers (A, B, C, D) of which at least one bit is variable and takes a value equal to one of the variable values (b0, b1, b2, b3).

5. Monitoring method according to the preceding claim, **characterized in that** the step of performing at least one calculation (E3) within the microprocessor (1) comprises calculations such as divisions, multiplications, square roots, squaring, between the numbers (A, B, C, D).

6. Monitoring method according to the preceding claim, **characterized in that** it comprises a step (E5) of determining at least one bit (result1_µC, result2_µC) representative of the results of the at least one calculation (E3) implemented by the microprocessor (1), and a step (E6) of transmitting this at least one bit (result1_µC, result2_µC) to the monitoring device (10).

7. Monitoring method according to one of the preceding claims, **characterized in that** the step of performing at least one calculation (E3) within the microprocessor (1) is implemented by software of a diagnostic block (8) of the microprocessor (1).

8. Monitoring method according to Claim 2, **characterized in that** the performing of at least one logic operation (E4) within the monitoring device comprises operations on the variable values (b0, b1, b2, b3).

9. Monitoring method according to the preceding claim, **characterized in that** it comprises comparing the variable values (b0, b1, b2, b3) using at least one exclusive OR gate (21, 22) within the monitoring device (10) in order to obtain single-bit results dependent on whether the compared variable values are equal or different.

10. Monitoring method according to one of the preceding claims, **characterized in that** the comparing step (E7) comprises generating a Boolean, a first value of which represents a normal state of the device equipped with a microprocessor and a second value a faulty state.

11. Monitoring method according to one of the preceding claims, **characterized in that** it comprises a step (E8) of actuating the device in order to put it in a safety configuration when its microprocessor is in a faulty state.

12. Monitoring device (10) for a device equipped with a microprocessor (1), comprising at least one input (13) for connection to a microprocessor (1) in order to receive input data from a microprocessor, a wired logic block (11) for performing logic operations on input data from the microprocessor, a comparator block (12) for comparing a result of a calculation performed by a microprocessor using the input data with a result obtained by the wired logic block (11) using the same input data in order to deduce therefrom a diagnosis of the microprocessor (1), and an output (15) for sending a signal representative of the result of the diagnosis of the operation of the microprocessor.

13. Monitoring device according to the preceding claim, **characterized in that** its wired logic block (11) and its comparator block (12) comprise logic gates of the OR, NOR, AND, NAND, exclusive-OR and/or exclusive-NOR type.

14. System comprising a microprocessor (1), **characterized in that** it comprises an external monitoring device (10) according to Claim 12 or 13, connected by at least one means for communication (16) with the microprocessor (1), and **in that** the microprocessor comprises a diagnostic block (8) which implements the performing of at least one calculation (E3) of the monitoring method according to one of Claims 1 to 11.

15. System according to the preceding claim, **characterized in that** it is an electrical circuit breaker, an electrical installation monitoring system or a safety automation system.
